**Europäisches Patentamt**

(19) **European Patent Office**

**Office européen des brevets**

(11) Veröffentlichungsnummer: **0 048 867**
**B1**

(12) **EUROPÄISCHE PATENTSCHRIFT**

(45) Veröffentlichungstag der Patentschrift:
10.07.85

(21) Anmeldenummer: 81107159.6

(22) Anmeldetag: 10.09.81

(51) Int. Cl.⁴: **G 02 B 6/24**

(54) **Faseroptische Brückenschaltungsvorrichtung.**

(30) Priorität: **30.09.80 DE 3036950**

(43) Veröffentlichungstag der Anmeldung:
**07.04.82 Patentblatt 82/14**

(45) Bekanntmachung des Hinweises auf die Patenterteilung:
**10.07.85 Patentblatt 85/28**

(84) Benannte Vertragsstaaten:
**DE FR GB**

(56) Entgegenhaltungen:
**DE - A - 2 810 858**
**DE - A - 2 841 140**
**US - A - 4 220 396**

**OPTICAL ENGINEERING, Band 19, Nr. 4, Juli/August 1980 New York E.G. RAWSON et al. "A Fiber Optical Relay for Bypassing Computer Network Repeaters" Seiten 628 bis 629**

(73) Patentinhaber: **Siemens Aktiengesellschaft, Berlin und München Wittelsbacherplatz 2, D-8000 München 2 (DE)**

(72) Erfinder: **Winzer, Gerhard, Dr., Günderodestrasse 16, D-8000 München 82 (DE)**

**Beschreibung**

Die Erfindung betrifft eine faseroptische Brückenschaltungsvorrichtung, wie sie im Oberbegriff des Anspruches 1 beschrieben ist.

In einer faseroptischen Repeaterstrecke soll bei Ausfall des Repeaters eine faseroptische Brücke hergestellt werden. Derartige Brücken finden Verwendung in faseroptischen Kommunikationssystemen mit Ringstruktur.

Aus der Veröffentlichung von E. G. Rawson und N. D. Bailey: »A fiber optical relais for bypassing computer network repeaters«, Optical Engineering, Vol. 19, No. 4, July/August 1980, S. 628—629, ist ein faseroptischer Brückenschalter zum Überbrücken eines Repeaters in einem faseroptischen Kommunikationssystem bekannt. Dieser opto-mechanische faseroptische Brückenschalter weist nur ein bewegliches Teil auf. Die von der faseroptischen Strecke ankommende Faser und die vom Repeater zum faseroptischen Brückenschalter ankommende Faser sind auf diesem beweglichen Teil, der aus einem ferromagnetischen Material besteht, fixiert, während die zu der faseroptischen Strecke wegführende Faser und die zum Repeater führende Faser auf einem unbeweglichen Plättchen fixiert sind. Das bewegliche Teil wird über eine Magnetspule und eine zusätzliche Federanordnung zwischen zwei Anschlägen hin- und herbewegt. Liegt das bewegliche Teil an einem der beiden Anschläge an, so ist der Repeater überbrückt, liegt das bewegliche Teil an dem anderen Anschlag an, so ist der Repeater in die faseroptische Kommunikationsstrecke mit einbezogen. Ein Nachteil dieses bekannten faseroptischen Brückenschalters ist, daß die Bewegung des beweglichen Teiles zwischen den beiden Anschlägen nicht berührungsfrei erfolgt, sondern daß bei dieser Bewegung vielmehr dieser bewegliche Teil über ein Substratplättchen gleitet. Dieses Gleiten des beweglichen Teiles über das Substratplättchen bedingt einen Verschleiß zwischen dem beweglichen Teil und dem Substratplättchen, der die Lebensdauer des faseroptischen Brückenschalters beschränkt und die erforderliche Schaltleistung erhöht.

Der Erfindung liegt die Aufgabe zugrunde, eine faseroptische Brückenschaltungsvorrichtung der eingangs genannten Art anzugeben, die eine hohe Betriebssicherheit und einen einfachen Aufbau aufweist und eine geringe Schaltleistung benötigt.

Diese Aufgabe wird erfindungsgemäß durch eine faseroptische Brückenschaltungsvorrichtung nach Anspruch 1 bzw. nach Anspruch 7 gelöst.

In einer Ausbildung der Erfindung werden die Enden der ankommenden und der wegführenden Faser von einem durch ein Magnetfeld berührungsfrei bewegbaren Metallteil gehalten, welches beim Schalten durch Veränderung des Magnetfeldes von einem der beiden Anschläge zu dem anderen dieser beiden Anschläge bewegt wird, wobei das Metallteil an einer einseitig gelagerten Ankerzunge befestigt ist.

Ankerzunge und Metallteil der obengenannten faseroptischen Brückenschaltungsvorrichtung können als ein Bauteil ausgebildet sein.

Zweckmäßig werden zur Veränderung des Magnetfeldes eine Magnetspule vorgesehen und Magnetspule, Ankerzunge und einer der beiden Anschläge als elektromagnetisches Relais ausgebildet.

In einer weiteren Ausbildung der Erfindung werden die Enden der beiden Fasern, die nicht in der beweglichen Ebene angeordnet sind, von dem Anschlag unterstützt, der nicht Teil des elektromagnetischen Relais ist. Die Faserenden können dabei längs der gesamten Länge der Unterstützung aufgekittet oder in anderer Weise befestigt sein, mindestens aber sind ausreichend viele Befestigungspunkte (Unterstützungspunkte) vorgesehen, daß die Fasern keine nennenswerte Vibration auf den Unterstützungen mehr ausführen können.

Zum Aufbau eines Schalters nach der Erfindung können handsübliche elektromagnetische Relais verwendet werden, ohne daß dabei ein Stromkreis getrennt werden soll, also Anker und Anschlag nicht durch einen Stromfluß elektrisch belastet werden. Eine derartige elektrische Belastung ist nur für solche Fälle vorgesehen, in denen gleichzeitig mit dem optischen Kontakt auch ein elektrischer Kontakt geöffnet bzw. geschlossen werden soll. Ankerzunge und Anschlag dienen im allgemeinen nur dazu, die optisch zu kontaktierenden Faserenden zu unterstützen, wobei die Faserenden derart befestigt sind, daß in der gewünschten Weise in den beiden Endstellungen des Schalters Faserenden mit ihren planparallelen Anschlußflächen in geringem Abstand fluchtend gegenüberliegen. Der Übergang einer Lichtwelle zwischen den Enden zweier Lichtleitfasern ist weitgehend verlustfrei, wenn die Lichtleitfasern planparallele Abschlußflächen haben und sich in geringem Abstand so gegenüber stehen, daß das eine Faserende in der Fluchtlinie des anderen Faserendes liegt, d. h., daß die eine Faser praktisch eine Verlängerung der anderen Faser darstellt. Der Kontakt zwischen diesen beiden Faserenden wird dadurch unterbrochen, daß das eine Faserende aus der Fluchtlinie des anderen Faserendes bewegt wird. Bei Verwendung eines elektromagnetischen Relais wird diese Bewegung dadurch erzielt, daß bei Ansteuerung des äußeren Magnetfeldes der Anker und damit die daran befestigten Faserenden von der einen Anschlagstellung zur anderen Anschlagstellung bewegt werden. Vorteilhaft können elektromagnetische Relais nach dem Prinzip sog. Reed-Kontakte aufgebaut sein, wobei jedoch auf ein Schutzgas verzichtet werden kann, wenn der Kontakt elektrisch nicht belastet wird.

Bei Reed-Relais sind Ankerzunge und Anschlag als Kontaktzungen aus einem magnetischen Material ausgebildet. Häufig ist eine Kontaktzunge (Anschlag) starr, die andere Kontaktzunge (Ankerzunge) eine an einem Ende eingespannte, vom Magnetfeld entgegen ihrer Rückstellkraft bewegliche Feder. Die beiden Kontaktzungen sind derart an den Kern der Magnetspule angeschlossen, daß durch den magnetischen Fluß bei Erregung der Magnetspule die Federn magnetisiert werden und aneinander anschlagen, wodurch die eine Schalterstellung erzielt wird. Bei Entregung der Magnetspule hebt das bewegliche Federende von dem starren Federende ab und schlägt in der anderen Schalterstellung an.

Bei der Verwendung derartiger Reed-Relais ist demnach die gesamte Kontaktzunge das vom Magnetfeld bewegbare Metallteil, das durch einseitige Einspannung der Kontaktzunge an der einen Seite gelagert ist. Sofern besondere Federcharakteristiken angestrebt werden, die durch magnetisierbare Werkstoffe nicht erreicht werden können, kann es aber auch vorteilhaft sein, die Ankerzunge aus einem anderen Material und nur das bewegliche Kontaktzungenende als ein magnetisierbares Metallteil herzustellen, auf das das Magnetfeld einwirkt. Auch kann es unter Umständen vorteilhaft sein, die Ankerzunge nicht einzuspannen, sondern zum Beispiel mittels eines Gelenkes zu lagern.

In einer Ausbildung der Erfindung können die Enden der zwei in der beweglichen Ebene liegenden Fasern von einem elektrisch steuerbaren piezoelektrischen Biegestreifen gehalten werden, welcher beim Schalten durch Veränderung der an diesem piezoelektrischen Biegestreifen angelegten Spannung von einem der beiden Anschläge zu dem anderen dieser beiden Anschläge bewegt wird. Als ein solcher piezoelektrischer Biegestreifen kann zum Beispiel ein PLZT-Biegekeramik-Streifen verwendet werden, welcher aus mehreren Piezolamellen in einer Sandwich-Anordnung besteht. An die einzelnen Lamellen werden über entsprechende Elektroden Steuerspannungen angelegt, die sehr niedrig sein können.

Vorteilhaft werden die Enden der Fasern in Führungsnuten ihrer Unterstützungen (Ankerzunge, Metallteil, piezoelektrischer Biegestreifen, ggf. Anschläge) fixiert. Diese Führungsnuten können bei einer Serienfertigung vorteilhaft fotolithografisch in Dickfilmtechnik hergestellt werden.

Bei einem Ausführungsbeispiel der Erfindung ist der faseroptische Brückenschalter so ausgebildet, daß die Enden der ankommenden und der wegführenden Fasern in der beweglichen Ebene angeordnet sind, wobei bei Lage der beweglichen Ebene am einen Anschlag die Faserstirnflächen der in der beweglichen Ebene fixierten Fasern an die Faserstirnflächen einer Faserschleife koppeln und wobei bei Lage der beweglichen Ebene am anderen Anschlag die Faserstirnflächen der in der beweglichen Ebene befestigten Fasern an die Faserstirnflächen der zwei weiteren Fasern koppeln. Vorteilhafterweise korrespondiert die Schalterstellung, bei der die Faserstirnflächen der beiden in der beweglichen Ebene fixierten Fasern an die Faserstirnflächen der Faserschleife koppeln, mit dem stromlosen Zustand des faseroptischen Brückenschalters.

In einem weiteren Ausführungsbeispiel der Erfindung ist der faseroptische Brückenschalter so ausgebildet, daß das Ende der ankommenden Faser und das Ende einer weiteren Faser in der beweglichen Ebene angeordnet sind, wobei bei Lage der beweglichen Ebene an einem der beiden Anschläge die Faserstirnflächen der ankommenden Faser und der anderen weiteren Faser und die Faserstirnflächen der einen weiteren Faser und der wegführenden Faser koppeln und wobei bei Lage der beweglichen Ebene am anderen der beiden Anschläge die Faserstirnflächen der ankommenden Faser und der wegführenden Faser koppeln. Auch bei diesem Ausführungsbeispiel korrespondiert vorteilhafterweise diejenige Schalterstellung mit dem stromlosen Zustand des faseroptischen Brückenschalters, bei der die Faserstirnflächen der ankommenden Faser und der wegführenden Faser koppeln.

Durch Hinzufügen einer zusätzlichen Faserschleife bei dem gerade beschriebenen Ausführungsbeispiel kann man einen faseroptischen Brückenschalter erhalten, bei dem in der einen Schalterstellung Licht von der ankommenden Faser zum Repeater geführt wird und vom Repeater in die wegführende Faser geleitet wird und bei dem in der anderen Schalterstellung das in der ankommenden Faser geführte Licht in die wegführende Faser geleitet wird und das vom Repeater kommende Licht über die Faserschleife wieder zum Repeater geführt wird. Dabei wird als drittes Faserende in der beweglichen Ebene der zusätzlichen Faserschleife angeordnet, wobei bei Lage der beweglichen Ebene an einem der beiden Anschläge die Faserstirnflächen der Enden der ankommenden Faser und der zum Repeater führenden Faser und die Faserstirnflächen der Enden der vom Repeater kommenden Faser und der wegführenden Faser koppeln und wobei bei Lage der beweglichen Ebene am anderen der beiden Anschläge die Faserstirnflächen der Enden der ankommenden Faser und der wegführenden Faser und die Faserstirnflächen des einen Faserendes der zusätzlichen Faserschleife und das Ende der zum Repeater führenden Faser und die Faserstirnflächen des Endes der vom Repeater kommenden Faser und des anderen Endes der zusätzlichen Faserschleife koppeln.

Zweckmäßigerweise dient ein Deckplättchen mit einem geeignet dimensionierten Schlitz zur Befestigung der Faserpaare bzw. Fasertripel auf einem Beweger bzw. auf einem Trägerkörner. Vorteilhafterweise wird das Deckplättchen vor dem Einlegen der Fasern mit dem Beweger verbunden und dann geschlitzt. Anschließend werden die Fasern eingeklebt. Dadurch läßt sich das Deckplättchen besonders dünn ausbilden. Insbesondere kann der Schlitz in den Beweger bzw. in den Trägerkörper hineinragen oder es kann der Schlitz unter Wegfall des Deckplättchens direkt in dem Beweger hergestellt werden. Ein kurzer Abschnitt des so hergestellten Rohlings wird in diesem Fall auch zur Befestigung der Faserenden verwendet, die nicht in der beweglichen Ebene fixiert sind. In einer Ausgestaltung der Erfindung wird als Deckplättchen zur Befestigung der Fasern ein mit V-Nuten versehenes Siliziumteil verwendet. Solche Nuten können in einem Siliziumteil zum Beispiel aus fotolithografischem Wege durch Vorzugsätzen (anisotropes Ätzen) unter Verwendung einer Siliziumdioxidmaske erzeugt werden (vgl. Appl. Phys. Latters, 26/4 (1975), S. 195).

In allen Fällen sind die im faseroptischen Brückenschalter gegenüberliegenden Faserstirnflächen poliert. Die Politur wird erst nach dem Einbau der Fasern in die Rohlinge durchgeführt. Der Abstand der Faserachsen soll möglichst klein sein. Diese Forderung ist insbesondere bei den Lösungen, bei denen in die zur Befestigung der Faserenden vorgesehenen Deckplättchen geeignet dimensionierte Schlitze angebracht werden, in idealer Weise erfüllbar. Bei diesen Lösungen muß der Hub der beweglichen Ebene nur einen Faserdurchmesser betragen.

Für die genaue Orientierung und Fixierung der Faserenden sind inzwischen viele Methoden erarbeitet worden (Führungsnuten in Riston oder Silizium, geprägte Furchen, durch Ultraschallpolitur erzeugte Furchen und dgl.), die je nach Material ausgewählt werden müssen.

Ausführungsbeispiele der Erfindung sind in der Zeichnung dargestellt und werden im folgenden näher beschrieben:

Fig. 1 zeigt die Funktion eines faseroptischen Brückenschalters.

Fig. 2 zeigt ein Aufbauprinzip eines faseroptischen Brückenschalters.

Fig. 3 zeigt den Aufbau eines anderen Ausführungsbeispiels eines faseroptischen Brückenschalters.

Fig. 3a zeigt diesen Schalter in Arbeitslage, wobei Licht von der Strecke über einen Teilnehmer-Repeater und wieder zur Strecke geführt wird.

Fig. 3b zeigt diesen Schalter in Ruhelage, wobei der Teilnehmer-Repeater überbrückt ist.

Fig. 4 zeigt einen zum Schalter der Fig. 3 ähnlichen faseroptischen Brückenschalter mit einer zusätzlichen Faserschleife.

Fig. 5 zeigt zur Befestigung der Faserenden im faseroptischen Brückenschalter erforderliche Komponenten.

Fig. 6 zeigt einen Biegekeramik-Streifen mit zugehöriger Elektrodenanordnung.

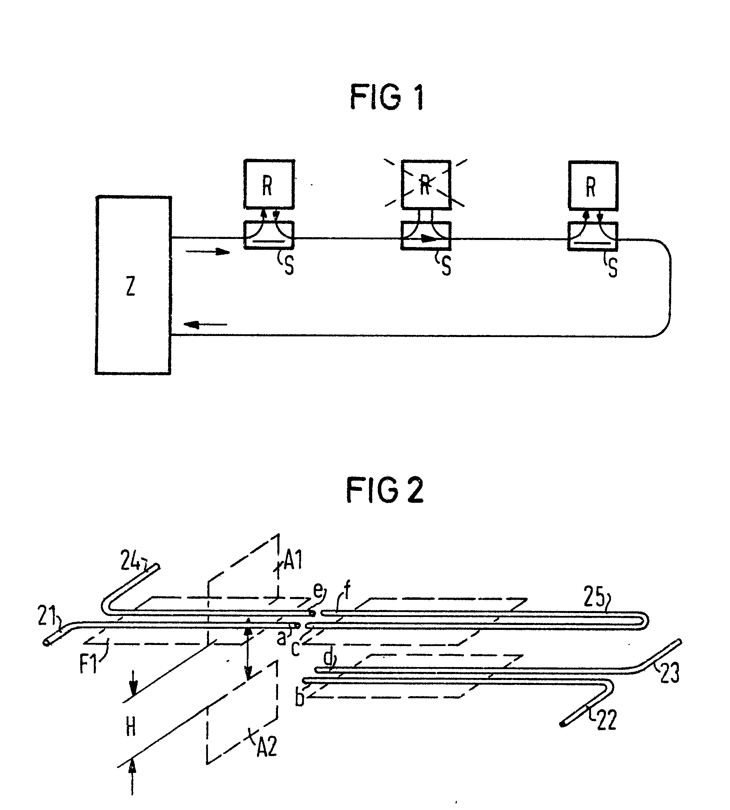

Fig. 1 zeigt die Funktion eines faseroptischen Brückenschalters S:

Bei einem faseroptischen Kommunikationssystem mit einer Zentrale Z und einer Ringstruktur mit einem Repeater R bei jedem Teilnehmeranschluß soll an jedem Teilnehmeranschluß ein faseroptischer Brückenschalter S vorhanden sein, womit der betreffende Teilnehmer bei Ausfall des Repeaters R automatisch überbrückt wird. Ein solches Teilnehmeranschlußnetz kann mit Gradientenprofil-Lichtleitfasern aufgebaut werden. Da es sich hierbei um Multimode-Fasern handelt, müssen auch die im Ringnetz implementierten faseroptischen Brückenschalter S Multimode-Bauelemente sein.

Fig. 2 zeigt ein Aufbauprinzip eines erfindungsgemäßen faseroptischen Brückenschalters. Die von der Übertragungsstrecke ankommende Faser 21 die zur Übertragungsstrecke wegführende Faser 24 liegen dabei in einer beweglichen Ebene $F_1$. Die Enden dieser Fasern werden, wie die Enden der übrigen Fasern ebenfalls, zum Beispiel in fotolithografisch hergestellten Führungsnuten oder auf andere Art ausgerichtet. Die Ebene $F_1$ ist über ein elastisches Element, zum Beispiel eine Feder, beweglich und kann um einen Hub H zwischen den beiden Anschlägen $A_1$ und $A_2$ bewegt werden. Die Lage am Anschlag $A_1$ korrespondiert vorzugsweise mit dem stromlosen Zustand des Brückenschalters. Bei dieser Schalterstellung wird der Teilnehmer dadurch überbrückt, daß die Faserstirnfläche a der von der Übertragungsstrecke ankommenden Faser 21 an die Faserstirnfläche c der Faserschleife 25 koppelt, wobei die andere Faserstirnfläche f dieser Faserschleife 25 an die Faserstirnfläche e der zur Übertragungsstrecke wegführenden Faser 24 koppelt. In der Ebene $F_2$ liegen die Faserenden 22 und 23, die zum Beispiel zum Repeater führen. Die Lage am Anschlag $A_2$ der beweglichen Ebene $F_1$ wird in Arbeitsstellung des Relais erreicht. Bei dieser Schalterstellung ist der Repeater bzw. Teilnehmer in die Übertragungsstrecke dadurch einbezogen, daß die Faserstirnfläche a der von der Übertragungsstrecke ankommenden Faser 21 an die Faserstirnfläche b der zum Teilnehmer führenden Faser 22 koppelt und daß die Faserstirnfläche d der vom Teilnehmer wegführenden Faser 23 an die Faserstirnfläche e der zur Übertragungsstrecke wegführenden Faser 24 koppelt. Die Faserenden der Faserschleife 25 können in einem Deckplättchen gehaltert und zusammen mit diesem Deckplättchen am Anschlag $A_1$ befestigt werden. Die Faserenden der Fasern 22 und 23 können ebenfalls in einem Deckplättchen gehaltert und zusammen mit diesem Deckplättchen am Anschlag $A_2$ befestigt werden. Die in der beweglichen Ebene $F_1$ befestigten Fasern können mit oder ohne zusätzliche Führungselemente an oder in einem Beweger fixiert werden, der entweder ein Reed-Kontakt oder ein Piezokeramik-Biegestreifen oder ein sonstiges Bewegungs-Hubelement ist.

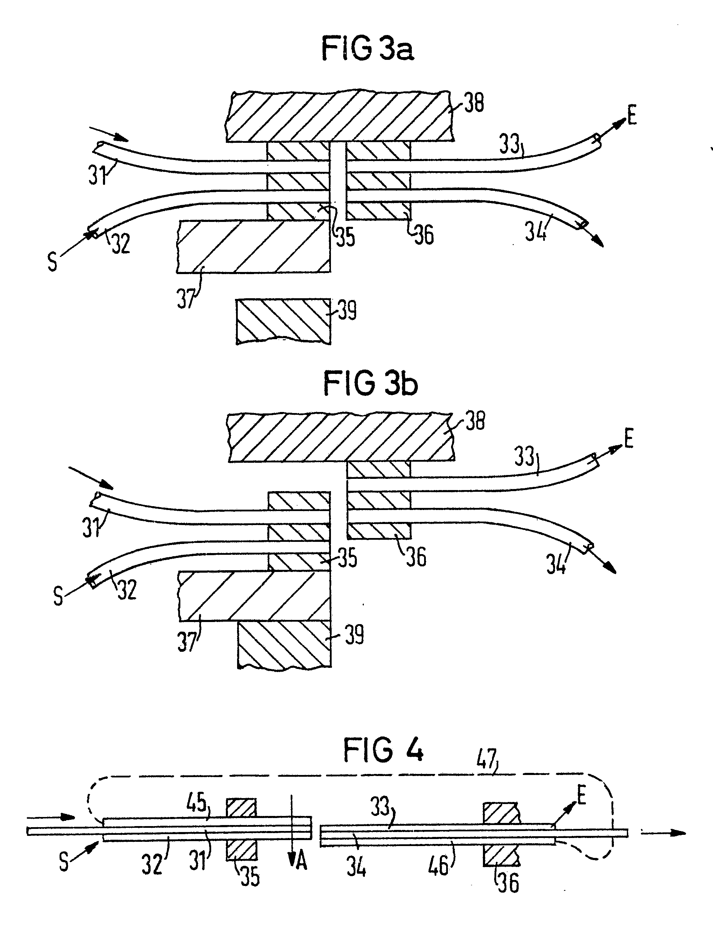

Fig. 3 zeigt den Aufbau eines weiteren Ausführungsbeispiels eines erfindungsgemäßen faseroptischen Brückenschalters. Bei diesem Parallelweg-Schalter sind Faserpaare 31, 32 bzw. 33, 34 in Führungselementen 35 bzw. 36 angeordnet. Die Faser 31 ist die von der Übertragungsstrecke ankommende Faser, die Faser 32 ist die vom Sender eines Teilnehmers ankommende Faser, die Faser 33 ist die zum Empfänger dieses Teilnehmers führende Faser und die Faser 34 ist die zur Übertragungsstrecke wegführende Faser. Die Enden der Fasern 31 und 32 werden gemeinsam mit Hilfe des Bewegers 37 wahlweise an den Anschlag 38 oder 39 gebracht. Die Enden der Fasern 33 und 34 sind mittels des Führungselementes 36 fest mit 38 verbunden. In der in der Fig. 3a gezeigten Arbeitslage des faseroptischen Brückenschalters kann somit ein Teilnehmer mit dem Empfänger E und dem Sender S in die Übertragungsstrecke eingekoppelt werden. In dieser Arbeitslage des faseroptischen Brückenschalters koppeln nämlich die Faserstirnflächen der Enden der Fasern 31 und 33 und ebenso koppeln in dieser Arbeitslage die Faserstirnflächen der Enden der Fasern 32 und 34. In der in der Fig. 3b gezeigten Ruhelage des faseroptischen Brückenschalters ist der betreffende Teilnehmer überbrückt. In dieser Ruhelage koppeln die Faserstirnflächen der Enden der von der Übertragungsstrecke ankommenden Faser 31 und der zur Übertragungsstrecke wegführenden Faser 34. Der Beweger 37 ist beispielsweise ein Piezokeramik-Biegestreifen.

Fig. 4 zeigt den Aufbau eines weiteren Ausführungsbeispiels eines erfindungsgemäßen faseroptischen Brückenschalters, bei welchem im Vergleich zu dem in Fig. 3 gezeigten Ausführungsbeispiel eine zusätzliche Faserschleife 47 angeordnet ist. Diese zusätzliche Faserschleife 47 ermöglicht, daß die Lichtwege-Strecke/Teilnehmerempfänger und Teilnehmersender/ Strecke vollständig vertauscht werden mit den Lichtwegen Strecke/Strecke und Teilnehmersender/Teilnehmerempfänger. In den beiden Führungselementen 35 und 36 sind also nicht mehr, wie in Fig. 3 gezeigt, Faserpaare, sondern vielmehr Fasertripel angeordnet. Dabei sind in dem Führungselement 35 zusätzlich das Faserende 45 der Faserschleife 47 und im Führungselement 36 das Faserende 46 der Faserschleife 47 befestigt. In der Arbeitslage dieses faseroptischen Brückenschalters ist somit ein Teilnehmer in dem Empfänger E und dem Sender S ebenso in die Übertragungsstrecke eingekoppelt wie bei dem in Fig. 3 gezeigten Ausführungsbeispiel. Die zusätzliche Faserschleife 47 hat in dieser Arbeitslage des faseroptischen Brückenschalters keine Funktion. In der Ruhelage dieses faseroptischen Brückenschalters nach Fig. 4 koppelt nun aber die vom Teilnehmer-Sender ankommende Faser 32 an das Faserende 46 der Faserschleife 47, wobei das andere Faserende 45 dieser Faserschleife 47 an die zum Teilnehmerempfänger wegführende Faser 33 koppelt. Gleichzeitig koppelt in dieser Ruhelage des faseroptischen Brückenschalters die von der Übertragungsstrecke ankommende Faser 31 an die zur Übertragungsstrecke wegführende Faser 34. Wenn sich die Fasermäntel von jeweils nebeneinander angeordneten Faserenden berühren, so haben die Faserachsen der jeweils nebeneinander angeordneten Fasern den Abstand A = D, wobei D der Faseraußendurchmesser ist. In diesem Fall muß das bewegliche Element zwischen Arbeitslage und Ruhelage um die Strecke A = D verschoben oder ausgelenkt werden.

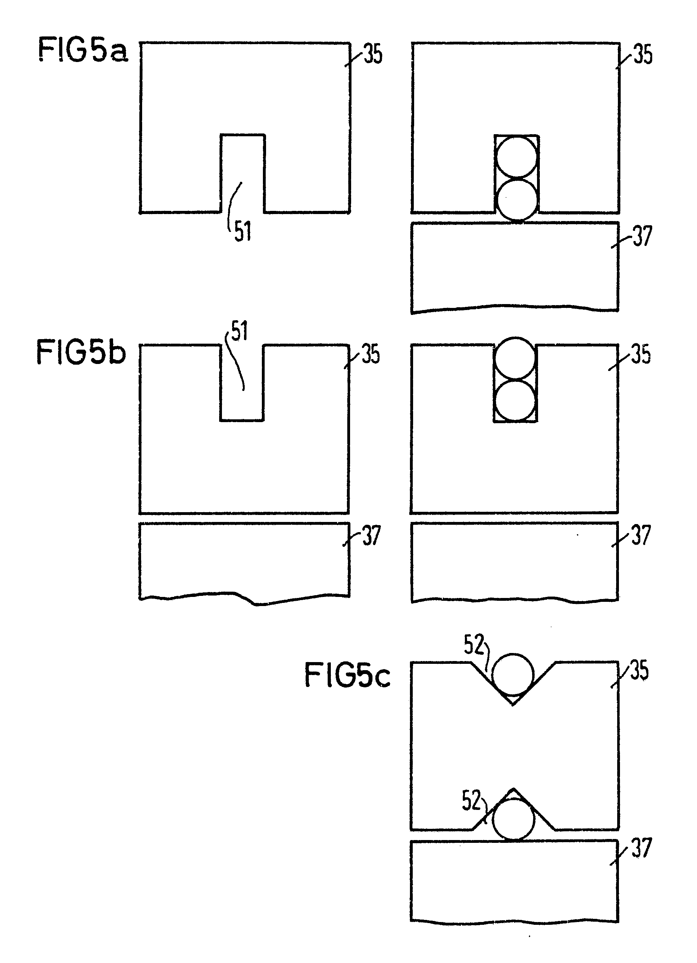

Fig. 5 zeigt Ausführungsbeispiele für die zur Befestigung der Faserenden im faseroptischen Brückenschalter erforderlichen Komponenten. Fig. 5a zeigt ein Deckplättchen 35 mit einem entsprechend dimensionierten Schlitz 51 zur Befestigung des Faserpaares 31, 32 bzw. des Fasertripels 31, 32 und 45 auf dem Beweger 37. Dieses Deckplättchen kann ebenso als Deckplättchen 36 zur Befestigung des Faserpaares 33, 34 bzw. des Fasertripels 33, 34, 46 auf dem Trägerkörper 38 verwendet werden. Die Faserenden sind dabei dicht nebeneinander parallelliegend in dem Schlitz 51 befestigt. Nach dem Einlegen der Fasern in den Schlitz 51 des Deckplättchens 35 wird das Deckplättchen 35 mit dem Beweger 37 verbunden. Bei dem Ausführungsbeispiel nach Fig. 5b wird das Deckplättchen 35 vor dem Einlegen der Faserpaare bzw. Fasertripel mit dem Beweger 37 verbunden und erhält anschließend den Schlitz 51. Erst dann werden die Fasern eingeklebt. Dadurch läßt sich das Deckplättchen 35 besonders dünn ausbilden. Insbesondere kann der Schlitz 51 in den Beweger 37 hineinragen oder es kann der Schlitz 51 unter Wegfall des Deckplättchens 35 direkt im Beweger 37 hergestellt werden. Ein kurzer Abschnitt des so hergestellten Rohlings wird in diesem Fall für die Komponente 36 verwendet. Das in Fig. 5c gezeigte Deckplättchen 35 ist ein mit V-Nuten 52 versehenes Siliziumteil. Diese V-Nuten 52 können zum Beispiel durch anisotropes Ätzen erzeugt werden. Auch in diesem Fall kann ein entsprechend erzeugtes Element für die Komponente 36 verwendet werden.

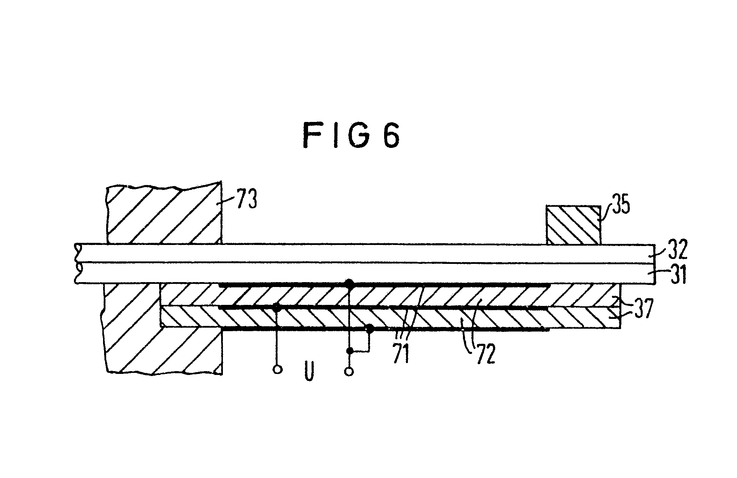

Fig. 6 zeigt schematisch einen PLZT-Biegekeramik-Streifen mit zugehöriger Elektrodenanordnung. Ein solcher piezoelektrischer Biegestreifen kann als Beweger 37 in den Ausführungsbeispielen des faseroptischen Brückenschalters nach den Fig. 3 und 4 Verwendung finden. Bei diesem Beweger 37 sind zwei Piezolamellen 72, auf die jeweils Elektrodenschichten 71 aufgedampft sind, so aneinandergeklebt, daß bei Anlegen einer Steuerspannung an die Elektroden 71 der mit einem Ende fixierte Beweger 37 hinsichtlich seines freien Endes in der gewünschten Weise ausgelenkt wird. Ein so ausgebildeter Beweger kann in einem faseroptischen Brückenschalter beispielsweise so angeordnet werden, daß bei Verschwinden der Steuerspannung der Teilnehmer überbrückt ist und daß bei maximaler Steuerspannung der Teilnehmer in die Übertragungsstrecke einbezogen ist. Versuche haben gezeigt, daß sich auch bei kleinen Betriebsspannungen (3 Volt) ausreichende Auslenkungen (A = 120 μm) für die Verwendung eines piezoelektrischen Biegestreifens in einem faseroptischen Brückenschalter erzielen lassen. Die Fasern 31, 32 sind mittels eines Führungselementes 35 an dem Beweger 37 befestigt. Der Beweger 37 ist beispielsweise in einer Halterung 73 befestigt. Im Bereich der Befestigungen sind keine Elektroden 71 vorhanden.

Der piezoelektrische Biegestreifen, mit dem auch bei kleinen Betriebsspannungen (3 Volt) ausreichende Auslenkungen (A = 120 μm) erzielt werden konnten, war 75 mm lang, 15 mm breit und war ein PLZT-sandwich-Biegestreifen aus zwei Lamellen à 150 µm Dicke.

Es wird abschließend noch einmal darauf hingewiesen, daß die bewegliche Ebene vorteilhaft von einer äußeren Kraft gegen eine Rückstellkraft an den einen Anschlag gedrückt und bei Abwesenheit dieser äußeren Kraft durch die angegebene Rückstellkraft an den anderen Anschlag bewegt wird.

**Patentansprüche**

1. Faseroptische Brückenschaltungsvorrichtung mit einer Schaltfeder, bei welcher zum Umschalten der faseroptischen Verbindung nur eine einzige Schaltfederbewegung nötig ist, mit einer von einem faseroptischen Kommunikationssystem ankommenden und einer in dieses wegführenden Faser und mit zwei weiteren, zu einem Repeater hin- bzw. von diesem zurückführenden Fasern, wobei zwei der Fasern in einer Ebene (F1) auf einem Teil liegen, welches mittels eines Bewegungs-/Hubelementes zwischen zwei Anschlägen (A1, A2) beweglich ist, wobei bei Anlegen des Bewegungs-/Hubelementes an dem einen (A1) der zwei Anschläge die ankommende Faser optisch mit der wegführenden Faser gekoppelt ist und wobei bei Anlegen des Bewegungs-/Hubelementes an dem anderen (A1) der zwei Anschläge die ankommende Faser mit der zum Repeater hinführenden Faser und die wegführende Faser mit der vom Repeater zurückführenden Faser optisch gekoppelt ist, dadurch gekennzeichnet,

— daß die beweglichen Fasern die ankommende und die wegführende Faser sind,
— daß die Enden der zwei beweglichen Fasern (21, 24) auf einer berührungsfrei senkrecht zur gemeinsamen Ebene dieser Fasern bewegbaren Zunge gehalten werden, welche beim Schalten von einem der beiden Anschläge (A1, A2) zu dem anderen dieser beiden Anschläge (A1, A2) bewegt wird, wobei bei Lage der beweglichen Zunge (F1) am einen Anschlag (A1) die Faserstirnflächen (a, e) der beweglichen Fasern (21, 24) an die Faserstirnflächen (c, f) einer Faserschleife (25) gekoppelt werden und wobei bei Lage der Zunge (F1) am anderen Anschlag (A2) die Faserstirnflächen (a, e) der beweglichen Fasern (21, 24) an die Faserstirnflächen (b, d) der zum Repeater hin- und von diesem zurückführenden Fasern (22, 23) gekoppelt werden.

2. Faseroptische Brückenschaltungsvorrichtung nach Anspruch 1, dadurch gekennzeichnet, daß die beiden Enden der ankommenden und der wegführenden Faser von einem durch ein Magnetfeld berührungsfrei bewegbaren Metallteil gehalten werden, welche beim Schalten durch Veränderung des Magnetfeldes von einem der beiden Anschläge weg bewegt wird, wobei das Metallteil an einer einseitig gelagerten Ankerzunge befestigt ist.

3. Faseroptische Brückenschaltungsvorrichtung nach Anspruch 2, dadurch gekennzeichnet, daß Ankerzunge und Metallteil als ein Bauteil ausgebildet sind.

4. Faseroptische Brückenschaltungsvorrichtung nach Anspruch 3, dadurch gekennzeichnet, daß eine Magnetspule zur Veränderung des Magnetfeldes vorgesehen ist und Magnetspule, Ankerzunge und einer der beiden Anschläge als elektromagnetisches Relais ausgebildet sind.

5. Faseroptische Brückenschaltungsvorrichtung nach Anspruch 4, dadurch gekennzeichnet, daß die Enden der beiden zur Repeater hin- und von diesem zurückführenden Fasern von dem Anschlag unterstützt sind, der nicht Teil des elektromagnetischen Relais ist.

6. Faseroptische Brückenschaltungsvorrichtung nach Anspruch 4 oder 5, dadurch gekennzeichnet, daß die Ankerzunge und der als Teil des elektromagnetischen Relais fungierende Anschlag als Kontaktzungen ausgebildet sind.

7. Faseroptische Brückenschaltungsvorrichtung mit einer Schaltfeder, bei welcher zum Umschalten der faseroptischen Verbindung nur eine einzige Schaltfederbewegung nötig ist, mit einer von einem faseroptischen Kommunikationssystem ankommenden und einer in dieses wegführenden Faser und mit zwei weiteren, zu einem Repeater hin- bzw. von diesem zurückführenden Fasern, wobei die ankommende Faser und eine der zwei weiteren Fasern in einer Ebene auf einem Teil liegen, welches mittels eines Bewegungs-/Hubelementes zwischen zwei Anschlägen beweglich ist, wobei bei Anliegen des Bewegungs-/Hubelementes an dem einen der zwei Anschläge die ankommende Faser optisch mit der wegführenden Faser gekoppelt ist und wobei bei Anliegen des Bewegungs-/Hubelementes an dem anderen der zwei Anschläge die ankommende Faser mit der zum Repeater hinführenden Faser und die wegführende Faser mit der vom Repeater zurückführenden Faser optisch gekoppelt ist, dadurch gekennzeichnet,

— daß die Enden der zwei beweglichen Fasern (31, 32) auf einer berührungsfrei bewegbaren Zunge gehalten werden, welche beim Schalten von einem der beiden Anschläge (38, 39) zu dem anderen dieser beiden Anschläge (38, 39) bewegt wird, wobei bei Lage der beweglichen Zunge am einen Anschlag (38) die Fasernstirnflächen der ankommenden Faser (31) und der anderen der zwei weiteren Fasern (33) sowie die Faserstirnflächen der einen der zwei weiteren Fasern (32) und der wegführenden Faser (34) gekoppelt sind und wobei bei Lage der beweglichen Zunge am anderen Anschlag (39) die Faserstirnflächen der ankommenden Faser (31) und der wegführenden Faser (34) gekoppelt sind,
— und daß die Zunge einen elektrisch steuerbaren piezoelektrischen Biegestreifen aufweist, welcher beim Schalten durch Veränderung der an diesem piezoelektrischen Biegestreifen angelegten Spannung von einem der beiden Anschläge (38, 39) zu dem anderen dieser beiden Anschläge (38, 39) bewegt wird.

8. Faseroptische Brückenschaltungsvorrichtung nach einem der Ansprüche 1 bis 7, dadurch gekennzeichnet, daß die Enden der Fasern in Führungsnuten ihrer Unterstützungen, also der Ankerzunge, des Metallteils, des piezoelektrischen Biegestreifens, ggf. der Anschläge, fixiert sind.

9. Faseroptische Brückenschaltungsvorrichtung nach Anspruch 8, dadurch gekennzeichnet, daß die Führungsnuten in planarer Dickfilmtechnik fotolithografisch hergestellt sind.

10. Faseroptische Brückenschaltungsvorrichtung nach Anspruch 2, dadurch gekennzeichnet, daß die Lage der beweglichen Zunge (F1) am einen Anschlag (A1) mit dem stromlosen Zustand des Brückenschalters korrespondiert.

11. Faseroptische Brückenschaltungsvorrichtung nach Anspruch 1, dadurch gekennzeichnet, daß die Enden der zwei auf der beweglichen Zunge (F1) liegende Fasern (21, 24) von einem elektrisch steuerbaren piezoelektrischen Biegestreifen gehalten werden, welcher beim Schalten durch Veränderung der an diesem piezoelektrischen Biegestreifen angelegten Spannung von einem der beiden Anschläge (A1, A2) zu dem anderen dieser beiden Anschläge (A1, A2) bewegt wird.

12. Faseroptische Brückenschaltungsvorrichtung nach Anspruch 7, dadurch gekennzeichnet, daß als drittes Faserende an der beweglichen Zunge ein Faserende (45) einer Faserschleife (47) angeordnet ist, wobei bei Lage der beweglichen Zunge am einen Anschlag (38) die Faserstirnflächen der Enden der ankommenden Faser (31) und der anderen der beiden weiteren Fasern (32) sowie die Faserstirnflächen der Enden der einen der beiden weiteren Fasern (33) und der wegführenden Faser (34) gekoppelt sind und wobei bei Lage der beweglichen Zunge am anderen Anschlag (39) die Faserstirnflächen der Enden der ankommenden Faser (31) und der wegführenden Faser (34) sowie die Faserstirnflächen des einen Endes (45) der Faserschleife (47) und des Endes einer der zwei weiteren Fasern (33) sowie die Faserstirnflächen des Endes der anderen der zwei weiteren Fasern (32) und des anderen Endes (46) der Faserschleife (47) gekoppelt sind.

13. Faseroptische Brückenschaltungsvorrichtung nach einem der Ansprüche 1 bis 12, dadurch gekennzeichnet, daß ein Deckplättchen (35, 36) mit einem entsprechend dimensionierten Schlitz die Faserpaare (31, 32; 33, 34) bzw. Fasertripel (31, 32, 45; 33, 34, 46) auf einem Beweger (37) bzw. auf einem Trägerkörper (38) befestigt.

14. Faseroptische Brückenschaltungsvorrichtung nach einem der Ansprüche 1 bis 13, dadurch gekennzeichnet, daß die im faseroptischen Brückenschalter gegenüberliegenden Faserstirnflächen optisch poliert sind.

15. Verfahren zur Herstellung einer faseroptischen Brückenschaltungsvorrichtung nach einem der Ansprüche 1 bis 12, dadurch gekennzeichnet, daß ein Deckplättchen (35, 36) vor dem Einlegen der zugehörigen Faserpaare (31, 32; 33, 34) bzw. Fasertripel (31, 32, 45; 33, 34, 46) mit einem Beweger (37) bzw. Tragkörper (38) verbunden wird, dann einen entsprechend dimensionierten Schlitz erhält und daß anschließend die zugehörigen Fasern eingeklebt werden.

16. Verfahren zur Herstellung einer faseroptischen Brückenschaltungsvorrichtung nach Anspruch 15, dadurch gekennzeichnet, daß bei einem besonders dünnen Deckplättchen (35, 36) der Schlitz für die zugehörigen Fasern in den Beweger (37) hineinragt, wobei ein kurzer Abschnitt des so hergestellten Rohlings für das Deckplättchen (36) verwendet wird.

17. Verfahren zur Herstellung einer faseroptischen Brückenschaltungsvorrichtung nach Anspruch 15, dadurch gekennzeichnet, daß zunächst ohne Deckplättchen (35) der Schlitz für die zugehörigen Fasern im Beweger (37) hergestellt wird, wobei ein kurzer Abschnitt des so hergestellten Rohlings für das Deckplättchen (36) verwendet wird.

18. Verfahren zur Herstellung einer faseroptischen Brückenschaltungsvorrichtung nach einem der Ansprüche 1 bis 12, dadurch gekennzeichnet, daß ein Deckplättchen (35, 36) mittels anisotropen Ätzens mit V-Nuten zur Aufnahme der zugehörigen Faserpaare (31, 32; 33, 34) bzw. Fasertripel (31, 32, 45; 33, 34, 46) versehen wird.

19. Verfahren zur Herstellung einer faseroptischen Brückenschaltungsvorrichtung nach Anspruch 14, dadurch gekennzeichnet, daß die optische Politur der im faseroptischen Brückenschalter gegenüberliegenden Faserstirnflächen erst nach dem Einbau der Fasern in die Rohlinge durchgeführt wird.

20. Verfahren zur Herstellung einer faseroptischen Brückenschaltungsvorrichtung nach einem der Ansprüche 1 bis 12, dadurch gekennzeichnet, daß für die Faserenden Träger aus Riston oder Silizium mit Führungsnuten versehen werden.

21. Verfahren zur Herstellung einer faseroptischen Brückenschaltungsvorrichtung nach einem der Ansprüche 1 bis 12, dadurch gekennzeichnet, daß die Faserenden in entsprechenden Materialien mit geprägten Furchen oder in durch Ultraschall-Politur erzeugten Furchen fixiert werden.

**Claims**

1. An optical fibre switching bridge device having a switching tongue, wherein in order to change over the fibre-optical connection only one single switching-tongue movement is required, having a fibre which comes from a fibre-optical communication system and a fibre which leads away to the latter and having two further fibres which lead to and from a repeater, wherein two of the fibres are arranged in a plane (F1) on a component movable between two stops (A1, A2) by means of a moving/lifting element, wherein when joining the moving/lifting element to one (A1) of the two stops the incoming fibre is optically coupled to the outgoing fibre and wherein when joining the moving/lifting element to the other (A1) of the two stops the incoming fibre is optically connected to the fibre leading to the repeater and the outgoing fibre is optically connected to the fibre leading back from the repeater, characterised in that

- the movable fibres are the incoming and the outgoing fibre,
- the ends of the two movable fibres (21, 24) are supported on a tongue which can be moved without contact at right angles to the common plane of these fibres and upon switching is moved from one of the two stops (A1, A2) to the other one of these stops (A1, A2), where when the movable tongue (F1) is positioned on one stop (A1) the end faces (a, e) of the movable fibres (21, 24) are coupled to the end faces (c, f) of a fibre loop (25) and where when the tongue (F1) is positioned on the other stop (A2) the end faces (a, e) of the movable fibres (21, 24) are coupled to the end faces (b, d) of the fibres (22, 23) leading to and from the repeater.

2. An optical-fibre switching bridge device as claimed in claim 1, characterised in that the ends of the incoming and outgoing fibre are held by a metal component which can be moved through a magnetic field without contact and which during switching is moved away from one of the two stops by changing the magnetic field, where the metal component is secured to an armature tongue positioned on one side.

3. An optical-fibre switching bridge device as claimed in claim 2, characterised in that the armature tongue and metal component are constructed as one component.

4. An optical-fibre switching bridge device as claimed in claim 3, characterised in that magnetic coil is provided for changing the magnetic field, and the magnetic coil, armature tongue and one of the two stops are designed as an electromagnetic relay.

5. An optical-fibre switching bridge device as claimed in claim 4, characterised in that the ends of the two fibres leading to and from the repeater are supported by the stop which does not constitute a component of the electro-magnetic relay.

6. An optical-fibre switching bridge device as claimed in claim 4 or 5, characterised in that the armature tongue and the stop, which acts as a component of the electro-magnetic relay, are designed as contact tongues.

7. An optical-fibre switching bridge device having a switching tongue, wherein only one single movement of the switching tongue is required to change over the fibre-optical connection, having a fibre from a fibre-optical communication system and a fibre which leads away to the latter and two further fibres which lead to and from à repeater, wherein the incoming fibre and one of the two further fibres are arranged in one plane on a component which can be moved between two stops by means of a moving/lifting element, wherein when joining the moving/lifting element to one of the two stops the incoming fibre is optically connected to the outgoing fibre and wherein when joining the moving/lifting element to the other of the two stops the incoming fibre is optically coupled to the fibre leading to the repeater and the outgoing fibre is optically connected to the fibre leading back from the repeater, characterised in that

- the ends of the two movable fibres (31, 32) are held on a tongue which can be moved without contact and which is moved from one of the two stops (38, 39) to the other upon switching, where when the movable tongue is positioned on one stop (38) the end faces of the incoming fibre (31) and of the other of the two further fibres (33) and the end faces of the one of the two further fibres (32) and of the outgoing fibre (34) are coupled and where when the movable tongue is positioned on the other stop (39) the end faces of the incoming fibre (31) and of the outgoing fibre (34) are coupled,
- and that the tongue has an electrically controllable piezo-electric bending strip which is moved from one of the two stops (38, 39) to the other of these two stops (38, 39) during switching by changing the voltage applied to the piezo-ectric bending strip.

8. An optical-fibre switching bridge device as claimed in one of claims 1 to 7, characterised in that the ends of the fibres are fixed in guide grooves of their supports, namely of the armature tongue, the metal component, the piezo-electric bending strip, and possibly of the stops.

9. An optical-fibre switching bridge device as claimed in claim 8, characterised in that the guide grooves are photolithographically produced using planar thick film technology.

10. An optical-fibre switching bridge device as claimed in claim 2, characterised in that the position of the movable tongue (F1) on the one stop (A1) corresponds to the currentless state of the switch bridge.

11. An optical-fibre switching bridge device as claimed in claim 1, characterised in that the ends of the two fibres (21, 24) arranged on the movable tongue (F1) are supported by an electrically controllable piezo-electric bending strip, which is moved from one of the two stops (A1, A2) to the other of the two stops (A1, A2) during switching by changing the voltage applied to the piezo-electric bending strip.

12. An optical-fibre switching bridge device as claimed in claim 7, characterised in that a fibre end (45) of a fibre loop (47) is arranged on the movable tongue as a third fibre end, where when the movable tongue is positioned on one stop (38) the end faces of the ends of the incoming fibre (31) and of the other of the two further fibres (32) are coupled, as well as the end faces of the end of the one of the two further fibres (33) and of the outgoing fibre (34), and where when the movable tongue is positioned on the other stop (39) the end faces of the ends of the incoming fibre (31) and of the outgoing fibre (34) are coupled as well as the end faces of the one end (45) of the fibre loop (47) and of the end of the two further fibres (33) and the end faces of the end of the other of the two further fibres (32) and of the other end (36) of the fibre loop (37).

13. An optical-fibres switching bridge device as claimed in one of claims 1 to 12, characterised in that a cover plate (35, 36) having a correspondingly dimensioned slot secures the fibres pairs (31, 32; 33, 34) or the fibre triplets (31, 32, 45; 33, 34, 46) on a mover (37) or on a carrier body (38), as the case may be.

14. An optical-fibre switching bridge device as claimed in one of claims 1 to 13, characterised in that the end faces of the fibres opposite in the fibre-optical switch bridge are optically polished.

15. A process for the production of an optical-fibre switching bridge device as claimed in one of claims 1 to 12, characterised in that prior to the insertion of the assigned fibre pairs (31, 32; 33, 34) or the fibre triplets (31, 32, 35; 33, 34, 46) a cover plate (35, 36) is connected to a mover (37) or a carrier body (38), as the case may be, then receives a correspondingly dimensioned slot, and that the assigned fibres are subsequently glued in.

16. A process for the production of an optical-fibre switching bridge device as claimed in claim 15, characterised in that in the event of a particularly thin cover plate (35, 36) the slot for the assigned fibres protrudes into the mover (37), where a short section of the blank produced in this manner is used for the cover plate (36).

17. A process for the production of an optical-fibre switching bridge device as claimed in claim 15, characterised in that the slot for the assigned fibres in the mover (37) is firstly produced without a cover plate (35), where a short section of the blank produced in this manner is used for the cover plate (36).

18. A process for the production of an optical-fibre switching bride device as claimed in one of claims 1 to 12, characterised in that a cover plate (35, 36) is provided with V-grooves for housing the assigned fibre pairs (31, 32; 33, 34) or fibre triplets (31, 32, 45; 33, 34, 46) by means of anisotropic etching.

19. A process for the production of an optical-fibre switching bridge device as claimed in claim 14, characterised in that the optical polish of the end faces of the fibres opposite in the fibre-optical switch bridge is carried out after installation of the fibres into the blanks.

20. A process for the production of an optical-fibres switching bridge device as claimed in one of claims 1 to 12, characterised in that for the fibre ends carriers made of riston or silicon are provided with guide grooves.

21. A process for the production of an optical-fibre switching bridge device as claimed in one of claims 1 to 12, characterised in that the fibre ends are fixed in corresponding materials with stamped channels or in channels formed by ultrasonic polishing.

**Revendications**

1. Dispositif à pont de commutation pour fibres optiques, comprenant un ressort de commutation, avec lequel un seul mouvement du ressort de commutation est nécessaire pour commuter la connexion entre fibres optiques, et comprenant une fibre entrante d'un système de communication à fibres optiques et une fibre sortante de ce système, de même que deux fibres supplémentaires menant à un répéteur et revenant de celui-ci, cù deux fibres sont situées en un plan (F1) sur une pièce déplaçable entre deux butées (A1, A2) au moyen d'un élément de déplacement alternatif et où, en cas d'application de l'élément de déplacement contre l'une (A1) des deux butées, un couplage optique est établi entre la fibre entrante et la fibre sortante et, en cas d'application de l'élément de déplacement contre l'autre (A2) des deux butées, un couplage optique est établi entre la fibre entrante et la fibre menant au répéteur et entre la fibre sortante et la fibre revenant du répéteur, caractérisé en ce que:

— les fibres mobiles sont les fibres entrante et sortante et,
— les extrémités des deux fibres mobiles (21, 24) sont maintenues sur une lamedé-plaçable, sans attouchement, perpendiculairement au plan commun de ces fibres, qui est déplacée lors die la commutation de l'une des deux butées (A1, A2) à l'autre de ces deux butées (A1, A2), la position de la lame mobile (F1) contre une butée (A1) produisant le couplage des faces extrêmes (a, e) des fibres mobiles (21, 24) aux faces extrêmes (c, f) d'une fibre formant une boucle (25) et la position de la lame (F1) contre l'aute butée (A2) produisant le couplage des faces extrêmes (a, e) des fibres mobiles (21, 24) aux faces extrêmes (b, d) des fibres (22, 23) menant au répéteur et revenant de celui-ci.

2. Dispositif à pont de commutation pour fibres optiques selon la revendication 1, caractérisé en ce que les deux extrémités de la fibre entrante et de la fibre sortante sont maintenues par une pièce métalique déplaçable, sans attouchement, par un champ magnétique, qui, lors de la commutation, produite par changement du champ magnétique, est écartée de l'une des deux butées, la pièce métallique étant fixée à une lame support montée unilatéralement.

3. Dispositif à pont de commutation pour fibres optiques selon la revendication 2, caractérisé en ce que la lame support et la pièce métallique sont réalisées sous forme d'une pièce.

4. Dispositif à pont de commutation pour fibres optiques selon la revendication 3, caractérisé en ce qu'une bobine électromagnétique est prévue pour changer le champ magnétique et que cette bobine, la lame support et une des deux butées sont réalisées comme un relais électromagnétique.

5. Dispositif à pont de commutation pour fibres optiques selon la revendication 4, caractérisé en ce que les extrémités des deux fibres menant au répéteur et revenant de celui-ci sont appuyées par la butée qui ne fait pas partie du relais électromagnétique.

6. Dispositif à pont de commutation pour fibres optiques selon la revendication 4 ou 5, caractérisé en ce que la lame support et la butée agissant en tant que partie du relais électromagnétique sont réalisées comme des lames de contact.

7. Dispositif à pont de commutation pour fibres optiques, comprenant un ressort de commutation, avec lequel un seul mouvement du ressort de commutation est nécessaire pour commuter la connexion entre fibres optiques et comprenant une fibre entrante d'un système de communication à fibres optiques et une fibre sortante de ce système, de même que deux fibres supplémentaires menant à un répéteur et revenant de celui-ci, où la fibre entrante et l'une des deux fibres supplémentaires sont situées en un plan sur une pièce qui est déplaçable entre deux butées au moyen d'un élément de déplacement alternatif et où, en cas d'application de l'élément de déplacement contre l'une des deux butées, un couplage optique est établi entre la fibre entrante et la fibre sortante et, en cas d'application de l'élément de déplacement contre l'autre des deux butées, un couplage optique est établi entre la fibre entrante et la fibre menant au répéteur et entre la fibre sortante et la fibre revenant du répéteur, caractérisé en ce que:

— les extrémités des deux fibres mobiles (31, 32) sont maintenues sur une lame déplaçable sans attouchement qui est déplacée lors de la commutation de l'une des deux butées (38, 39) à l'autre de ces deux butées (38, 39), l'application de la lame mobile contre une butée (38) produisant le couplage des faces extrêmes de la fibre entrante (31) et de l'autre des deux fibres supplémentaires (33), de même que le couplage des faces extrêmes de la première des deux fibres supplémentaires (32) et de la fibre sortante (34), et l'application de la lame mobile contre l'autre butée (39) produisant le couplage des faces extrêmes de la fibre entrante (31) et de la fibre sortante (34) et,

— la lame présente une bande flexible piézo-électrique à commande électrique qui, lors de la commutation, Produite par changement de la tension appliquée à cette bande flexible piézo-électrique, est déplacée de l'une des deux butées (38, 39) à l'autre de ces deux butées (38, 39).

8. Dispositif à pont de commutation pour fibres optiques selon une des revendication 1 à 7, caractérisé en ce que les extrémités des fibres sont fixées dans des rainures-guides de leurs appuis, c'est-à-dire de la lame support de la pièce métallique, de la bande flexible piézo-électrique et, éventuellement, des butées.

9. Dispositif à pont de commutation pour fibres optiques selon la revendication 8, caractérisé en ce que les rainures-guides sont réalisées par photolitographie selon la technique planaire des couches épaisses.

10. Dispositif à pont de commutation pour fibres optiques selon la revendication 2, caractérisé en ce que la position de la lame mobile (F1) contre une butée (A1) correspond à l'état de repos du commutateur en pont.

11. Dispositif à pont de commutation pour fibres optiques selon la revendication 1, caractérisé en ce que les extrémités des deux fibres (21, 24) disposées sur la lame mobile (F1) sont maintenues par une bande flexible piézo-électrique à commande électrique qui, lors de la commutation, produite par changement de la tension appliquée à cette bande flexible piézo-électrique, est déplacée de l'une des deux butées (A1, A2) à l'autre de ces deux butées (A1, A2).

12. Dispositif à pont de commutation pour fibres optiques selon la revendication 7, caractérisé en ce qu'une extrémité (45) d'une fibre formant une boucle (47) est disposée en tant que troisième extrémité de fibre sur la lame mobile, l'application de la lame mobile contre une butée (38) produisant le couplage des faces extrêmes de la fibre entrante (31) et de l'autre (32) des deux fibres supplémentaires, de même que le couplage des faces extrêmes de la première (33) des deux fibres supplémentaires et de la fibre sortante (34), et l'application de la lame mobile contre l'autre butée (39) produisant le couplage des faces extrêmes de la fibre entrante (31) et de la fibre sortante (34), le couplage des faces extrêmes d'une extrémité (45) de la fibre formant la boucle (47) et d'une (31) de deux autres fibres, de même que le couplage des faces extrêmes de l'autre (32) des deux fibres supplémentaires et de l'autre extrémité (46) de la fibre formant la boucle (47).

13. Dispositif à pont de commutation pour fibres optiques selon l'une des revendications 1 à 12, caractérisé en ce qu'une plaquette de recouvrement (35, 36), pourvue d'une encoche dimensionnée en conséquence, fixe les paires de fibres (31, 32, 33, 34) ou les triplets de fibres (31, 32, 45; 33, 34, 46) sur un élément de déplacement (37) ou un support (38).

14. Dispositif à pont de commutation pour fibres optiques selon l'une des revendications 1 à 13, caractérisé en ce les faces extrêmes de fibres situées les unes en face des autres dans le commutateur en pont pour fibres optiques portent un polissage optique.

15. Procédé pour fabriquer un dispositif à pont de commutation pour fibres optiques selon une des revendications 1 à 12, caractérisé en ce qu'une plaquette de recouvrement (35, 36) est assemblée avec un élément de déplacement (37) ou un support (38) avant la mise en place des paires de fibres correspondantes (31, 32; 33, 34) ou des triplets de fibres (31, 32, 45; 33, 34, 46), que cette plaquette est pourvue ensuite d'une encoche dimensionnée en conséquence et que, après cela, les fibres concernées sont collées en place.

16. Procédé pour fabriquer un dispositif à pont de commutation pour fibres optiques selon la revendication 15, caractérisé en ce que, dans le cas d'une plaquette de recouvrement particulièrement mince (35, 36), l'encoche pour les fibres concernées fait saillie dans l'élément de déplacement (37), un court tronçon de l'ébauche ainsi réalisée étant utilisé pour la plaquette de recouvrement (36).

17. Procédé pour fabriquer un dispositif à pont de commutation pour fibres optiques selon la revendication 15, caractérisé en ce que l'on réalise d'abord, sans plaquette de recouvrement (35), l'encoche pour les fibres concernées dans l'élément de déplacement (37), et on utilise un court tronçon de l'ébauche ainsi obtenu pour la plaquette de recouvrement (36).

18. Procédé pour fabriquer un dispositif à pont de commutation pour fibres optiques selon l'une des revendications 1 à 12, caractérisé en ce qu'une plaquette de recouvrement (35, 36) est pourvue, par attaque anisotrope, d'entailles en V pour l réception des paires de fibres concernées (31, 32; 33, 34) ou des triplets de fibres (31, 32, 45; 33, 34, 46).

19. Procédé pour fabriquer un dispositif à pont de commutation pour fibres optiques selon la revendication 14, caractérisé en ce que le polissage optique des faces extrêmes des fibres situées les unes en face des autres dans le commutateur en pont pour fibres optiques est réalisé seulement après le montage des fibres dans les ébauches.

20. Procédé pour fabriquer un dispositif à pont de commutation pour fibres optiques selon l'une des revendications 1 à 12, caractérisé en ce que l'on utilise des supports de Riston ou de silicium avec des rainures guides pour les extrémités des fibres.

21. Procédé pour fabriquer un dispositif à pont de commutation pour fibres optiques selon l'une des revendications 1 à 12, caractérisé en ce que les extrémités des fibres sont fixées dans des sillons produits par estampage dans des matériaux adéquats ou dans des sillons produits par polissage aux ultrasons.

0 048 867

FIG 1

FIG 2

13

## FIG 3a

## FIG 3b

## FIG 4

FIG5a

35

51

35

37

FIG5b

51

35

35

37

37

FIG5c

52

35

52

37

0 048 867

# FIG 6